# EUROPÄISCHE PATENTSCHRIFT

(11) **EP 1 248 699 B1**
(45) Veröffentlichungstag und Bekanntmachung des Hinweises auf die Patenterteilung: **03.09.2003**
(21) Anmeldenummer: 00977480.3
(22) Anmeldetag: 04.11.2000
(51) Int. Cl.: B27C 9/04, B25H 1/10, B23Q 11/00

(54) **VORRICHTUNG ZUR SPANENDEN BEARBEITUNG EINES WERKSTÜCKS**
DEVICE FOR METAL-CUTTING MACHINING OF A WORKPIECE
DISPOSITIF POUR USINER UNE PIECE PAR ENLEVEMENT DE COPEAUX

(30) Priorität: 30.12.1999 DE 19964035
(43) Veröffentlichungstag der Anmeldung: 16.10.2002
(73) Patentinhaber: Ruggaber, Reiner, 78737 Fluorn-Winzeln (DE)
(72) Erfinder: Ruggaber, Reiner, 78737 Fluorn-Winzeln (DE)
(74) Vertreter: Pfiz, Thomas, Dr.
(86) Internationale Anmeldenummer: EP0010860
(87) Internationale Veröffentlichungsnummer: WO01049466

(56) Entgegenhaltungen:
- DE-A- 3 206 318
- DE-A- 3 842 963
- DE-U- 9 411 303
- FR-A- 2 533 491
- FR-A- 2 680 719
- US-A- 3 008 501
- US-A- 5 443 554

## Beschreibung

Die Erfindung betrifft eine Vorrichtung zur spanenden Bearbeitung eines Werkstücks in verschiedenen Arbeitsgängen gemäß dem Oberbegriff des Anspruchs 1. Eine solche Vorrichtung ist z.B. aus FR-A-2 533 491 bekannt.

Zur Holzbearbeitung sind stationäre Bearbeitungsmaschinen der vorgenannten Art bekannt, bei denen eine Mehrzahl von Bearbeitungsaggregaten wie Fräsen und Sägen als austauschbare Zusatzmodule an einem Basistischgestell wechselweise in Einsatz gebracht werden können. Als nachteilig wird hierbei der vergleichsweise hohe Arbeitsaufwand zum Umrüsten und Einstellen der Maschine angesehen.

Ausgehend hiervon liegt der Erfindung die Aufgabe zugrunde, eine einfach und kompakt aufgebaute Vorrichtung anzugeben, welche mit geringem Rüstund Einstellaufwand eine Vielzahl von unterschiedlichen Werkzeugen zur Komplettbearbeitung insbesondere von Holzwerkstücken im Möbelbau bereitstellt.

Zur Lösung dieser Aufgabe wird die im Patentanspruch 1 angegebene Merkmalskombination vorgeschlagen. Vorteilhafte Ausgestaltungen und Weiterbildungen der Erfindung ergeben sich aus den abhängigen Ansprüchen.

Die Erfindung geht von dem Gedanken aus, eine Vielzahl von parallel angeordneten Bearbeitungsgeräten durch wenige Handgriffe wahlweise einzeln zum Einsatz zu bringen. Dementsprechend werden erfindungsgemäß eine Mehrzahl von unterhalb des Auflagetisches angeordneten Verstelleinheiten zur Höhenverstellung jeweils eines Bearbeitungsaggregats zwischen einer unteren Bereitschaftsstellung und einer oberen Arbeitsstellung vorgeschlagen, wobei ein in der Arbeitsstellung befindliches Bearbeitungsaggregat mit seinem nach oben abstehenden Werkzeug eine zugehörige Durchtrittsöffnung des Auflagetisches durchgreift. Damit ist es möglich, ein gewünschtes, an einem ausgewählten Bearbeitungsaggregat vorbestücktes Werkzeug rasch und präzise bereitzustellen, wobei der Arbeitsraum oberhalb des Auflagetisches nicht eingeschränkt wird.

Die Verstelleinheiten sind durch jeweils eine handbetätigte, mechanisch arbeitende Schiebevorrichtung gebildet, und die Verstelleinheiten haben jeweils eine vertikal ausgerichtete Führungsschiene und einen daran geführten Aufnahmeschlitten zur Aufnahme eines Bearbeitungsaggregats.

Um aufwendige Feineinstellungen zu vermeiden und eine große Wiederholgenauigkeit zu gewährleisten, ist es von Vorteil, wenn die Verstelleinheiten eine Feststellvorrichtung zur Positionierung des Bearbeitungsaggregats in einer vorgegebenen Arbeitsstellung aufweisen. Dies läßt sich mit geringem Bauaufwand durch einen längs der Führungsschienen geführten und daran in einer frei wählbaren Position fixierbaren Gleitstein und ein an dem Aufnahmeschlitten gelagertes, mit dem Gleitstein in Eingriff bringbares Feststellorgan realisieren. Um eine freie Positionierung auf einfache Weise zu ermöglichen, kann das Feststellorgan durch eine in den Gleitstein einschraubbare und dabei eine Klemmverbindung mit der Führungsschiene herstellende, vorzugsweise werkzeuglos betätigbare Feststellschraube gebildet sein. Alternativ oder ergänzend kann das Feststellorgan durch einen über eine vorgespannte Feder an dem Aufnahmeschlitten abgestützten, in eine Rastöffnung des Gleitsteins einrastbaren Rastbolzen gebildet sein. Um hier eine vorwählbare Arbeitsstellung definiert festlegen zu können, wird vorgeschlagen, daß der Gleitstein mittels einer Klemmschraube unabhängig von dem Aufnahmeschlitten an der Führungsschiene vorpositionierbar ist.

Vorteilhafterweise sind der Aufnahmeschlitten und der Gleitstein in einer Führungsnut der Führungsschiene vertikal verschiebbar. Zum einfachen und schnellen Positionieren von Vorteil, wenn die Verstelleinheiten einen handbetätigbaren Vertikaltrieb zum Verschieben des Bearbeitungsaggregats zwischen der Bereitschaftsstellung und der Arbeitsstellung aufweisen. Dabei kann die Handhabung dadurch weiter vereinfacht werden, daß an der Führungsschiene eine Exzenterscheibe mittels Stemgriff exzentrisch drehbar gelagert ist, und daß der Aufnahmeschlitten an seiner nach unten weisenden Stirnseite radial auf der Exzenterscheibe abgestützt ist.

Zur Optimierung des jeweiligen Werkzeugeinsatzes ist es günstig, wenn die vorzugsweise als Handgerät, insbesondere als Unterflurfräse ausgebildeten Bearbeitungsaggregate einen in seiner Drehzahl verstellbaren Elektromotor und eine damit angetriebene Spindel zur Aufnahme des Werkzeugs aufweisen.

Um den Werkzeugwechsel zu vereinfachen, ist es vorteilhaft, wenn der Auflagetisch über Schamiere an einem Tischgestell nach oben verschwenkbar gelagert ist.

Eine weitere vorteilhafte Ausführung sieht vor, daß die vertikal ausgerichteten Verstelleinheiten im seitlichen Abstand voneinander angeordnet sind, und daß der Auflagetisch im entsprechenden Abstand voneinander angeordnete, gegenüber den hindurchgreifenden Werkzeugen ein Übermaß aufweisende kreisförmige Durchtrittsöffnungen aufweist.

Zum Schutz der Bedienperson und zur Erhöhung der Betriebssicherheit ist an der Unterseite des Auflagetisches ein Spanauffangschacht angeordnet, welcher mit den Durchtrittsöffnungen des Auflagetisches fluchtende Querdurchbrüchen für den Durchtritt der Werkzeuge und eine Längsöffnung zum Auswurf von Spänen aufweist. Eine weitere Verbesserung auch im Hinblick auf die Standzeit kann durch eine längs des Auflagetisches verschiebbare Absaugvorrichtung erzielt werden, welche zwei mit ihren Saugöffnungen ober- und unterhalb des Auflagetisches auf ein in der Arbeitsstellung befindliches Bearbeitungsaggregat ausrichtbare und auslaßseitig an eine gemeinsame Saugquelle anschließbare Saugstutzen aufweist. Dabei hat es sich als vorteilhaft erwiesen, wenn die Saugstutzen ein U-förmiges Querschnittsprofil aufweisen, wobei die freien Längskanten des oberen Saugstutzens auf dem Auflagetisch und des unteren Saugstutzens auf einer unter dem Auflagetisch angeordneten Auffangplatte aufliegen.

Eine weitere Erhöhung der Bediensicherheit kann durch eine gemeinsam mit der Absaugvorrichtung verschiebbare Schutzvorrichtung zur Werkzeugverdeckung erreicht werden.

Zum exakten und sicheren Führen der Werkstücke gegenüber den feststehenden Werkzeugen wird vorgeschlagen, daß an dem Auflagetisch ein abnehmbares Anschlaglineal und zwei an dem Anschlaglineal zur beidseitigen Begrenzung der Durchtrittsöffnungen längsverstellbare Anschlagplatten angeordnet sind.

Um die Verletzungsgefahr zu verringern, ist es von Vorteil, wenn die Bearbeitungsaggregate über eine Schutzschaltung nur einzeln einschaltbar sind.

Eine besonders flexible Bearbeitung wird durch eine seitlich an dem Auflagetisch angeordnete zusätzliche Verstelleinheit zur Aufnahme eines mit einem Fräswerkzeug bestückten Bearbeitungsaggregats und eine zweiflügelige Werkstückauflage ermöglicht, wobei die Werkstückauflage zur Anpassung an Krümmungskonturen scharnierartig miteinander verbundene Auflageflügel aufweisen kann, die unter Freihaltung einer zentralen Durchtrittsöffnung für das Fräswerkzeug in veränderlichen Winkelstellungen mittels einer Schnellspanneinrichtung gegeneinander feststellbar sind.

Im folgenden wird die Erfindung anhand eines in der Zeichnung in schematischer Weise dargestellten Ausführungsbeispiels näher erläutert. Es zeigen
- Fig. 1: eine Vorrichtung zur spanenden Bearbeitung von Holzwerkstükken in perspektivischer Ansicht;
- Fig. 2: eine Verstelteinheit zum vertikalen Positionieren und Festlegen eines Bearbeitungsaggregats der Vorrichtung nach Fig. 1 in einem Vertikalschnitt;
- Fig. 3 bis 6: Horizontalschnitte entlang der entsprechend numerierten Schnittlinien der Fig. 2;
- Fig. 7 und 8: eine ausschnittsweise Seitenansicht und Draufsicht der Vorrichtung nach Fig. 1; und
- Fig. 9: eine Werkstückauflage für bogenförmige Werkstücke zum Anbau an die Vorrichtung nach Fig. 1 in perspektivischer Ansicht.

Die in der Zeichnung dargestellte Vorrichtung dient zur Durchführung aufeinanderfolgender Fräs- und Schleifarbeiten an Holzwerkstücken und besteht im wesentlichen aus einem auf einem Gestell 10 abgestützten Auflagetisch 12, mehreren Bearbeitungsaggregaten 14 zum rotierenden Antrieb jeweils eines Werkzeugs 16 und einer entsprechenden Anzahl von unterhalb des Auflagetisches 12 angeordneten Verstelleinheiten 18 zur Höhenverstellung jeweils eines Bearbeitungsaggregats 14 zwischen einer unteren Bereitschaftsstellung und einer oberen Arbeitsstellung.

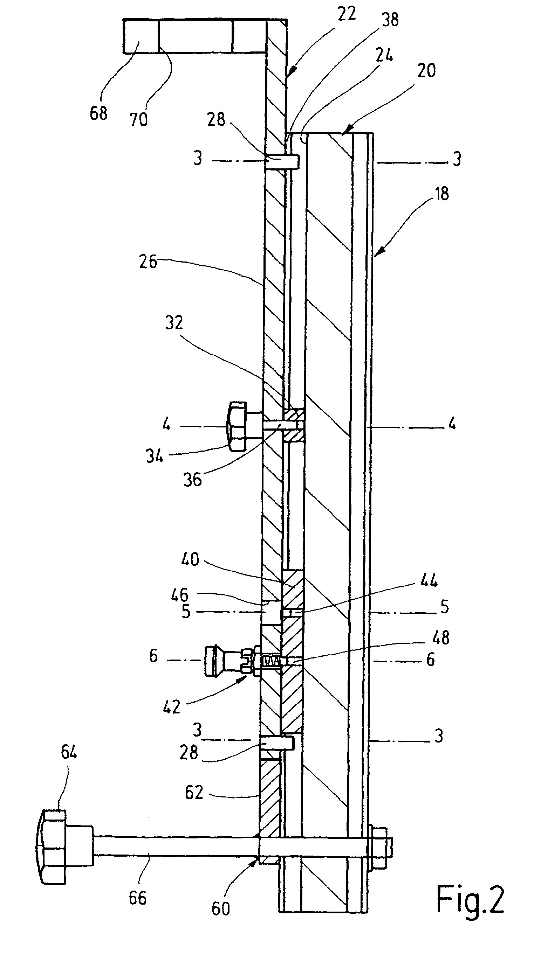

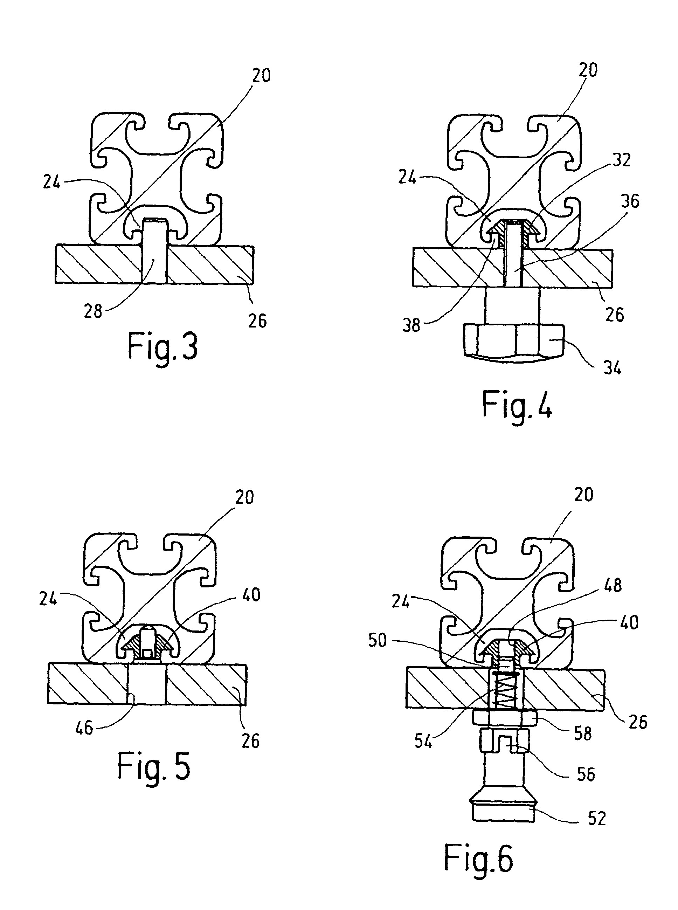

Wie am besten aus Fig. 2 ersichtlich, weisen die Verstelleinheiten 18 jeweils eine vertikal ausgerichtete gestellfeste Führungsschiene 20 und einen daran geführten Aufnahmeschlitten 22 zur Aufnahme eines Bearbeitungsaggregats 14 auf. Die Führungsschiene 20 ist durch einen quadratischen Profilstab gebildet, der an seinen Seiten jeweils mit einer hinterschnittenen Profilnut 24 versehen ist. Der Führungsschlitten 22 weist eine seitlich an der Führungsschiene 20 anliegende Schlittenplatte 26 auf, die über zwei breitseitig abstehende Paßstifte 28 in der als Führungsnut vorgesehenen zugewandten Profilnut 24 längsverschiebbar gelagert ist (Fig. 3).

Zur Sicherung der Anlagestellung des Aufnahmeschlittens 22 an der Führungsschiene 20 und zur freien Positionierung des jeweiligen Bearbeitungsaggregats 14 in einer vorgesehenen Arbeitsstellung weisen die Verstelleinheiten 18 eine Feststellvorrichtung 30 auf. Diese umfaßt einen in der Führungsnut 24 angeordneten Gleitstein 32, der durch eine an der Schlittenplatte 26 gelagerte, mittels Stemgriff 34 werkzeuglos betätigbare Feststellschraube 36 gegen die hinterschnittenen Nutflanken 38 klemmbar ist (Fig. 4). Damit lassen sich innerhalb des Verschiebebereichs beliebige Schlittenpositionen bzw. Arbeitsstellungen festlegen. Um altemativ eine vorgewählte Schlittenposition rasch einnehmen zu können, umfaßt die Feststellvorrichtung 30 einen weiteren in der Führungsnut 24 festklemmbaren langgestreckten Gleitstein 40, an welchem der Führungsschlitten 22 über eine Rastvorrichtung 42 arretierbar ist. Wie in Fig. 5 gezeigt, läßt sich der Gleitstein 40 über eine Wurmschraube 44 in der Führungsnut 24 in beliebiger Lage festklemmen, wobei in der Schlittenplatte 26 ein Durchbruch 46 für einen Schraubendreher zum Anziehen der Wurmschraube 44 vorgesehen ist. Die in Fig. 6 gezeigte Rastvorrichtung 42 weist einen in eine Rastöffnung 48 des Gleitsteins 40 einrastbaren Rastbolzen 50 auf. Der Rastbolzen 50 ist mittels eines Griffstücks 52 entgegen der Kraft einer Rückstellfeder 54 aus seiner Raststellung aushebbar. Dabei kann durch Verdrehen des in der Raststellung mit einem axialen Fortsatz 56 in einen Aufnahmeschlitz einer Sicherungsmutter 58 formschlüssig eingreifenden Griffstücks 52 die Freigabestellung beibehalten werden.

Um den Aufnahmeschlitten 22 auf einfache Weise manuell verschieben zu können, ist der in Fig. 2 gezeigte Vertikaltrieb 60 vorgesehen. Dieser umfaßt eine Exzenterscheibe 62, die mit einer mittels Sterngriff 64 betätigbaren, exzentrisch durchgehenden Exzenterwelle 66 fest verschweißt ist. Die Exzenterwelle 66 ist an der Führungsschiene 18 drehbar gelagert, so daß die radial gegen die untere Stirnseite der Schlittenplatte 26 anliegende Exzenterscheibe 62 bei Ausübung einer Drehbewegung einen Vertikalhub auf den Aufnahmeschlitten 22 überträgt.

An seinem oberen Ende weist der Aufnahmeschlitten 22 eine horizontal abstehende geschlitzte Klemmplatte 68 auf, die mit einem Durchbruch 70 zur Halterung eines Spannhalses des zugehörigen Bearbeitungsaggregats 14 versehen ist. Die Bearbeitungsaggregate 14 sind als Unterflurfräsen ausgebildet und weisen einen drehzahlgeregelten Elektromotor 72 und eine damit angetriebene, nach oben ragende Spindel 74 zur Aufnahme eines Fräswerkzeugs 16 auf. Aus Sicherheitsgründen sind die Bearbeitungsaggregate 14 über eine nicht gezeigte Schutzschaltung angesteuert, welche sicherstellt, daß nicht gleichzeitig mehrere Elektromotoren 72 einschaltbar sind.

An dem Gestell 10 können wahlweise bis zu zehn Verstelleinheiten 18 im seitlichen Abstand voneinander befestigt werden. Dementsprechend weist der Auflagetisch 12 im Bereich seiner Längsmittelebene im entsprechenden Abstand voneinander in Reihe angeordnete kreisförmige Durchtrittsöffnungen 76 auf, welche gegenüber den in der Arbeitsstellung hindurchgreifenden Werkzeugen 16 ein Übermaß aufweisen. Um den Zugriff auf die Bearbeitungsaggregate 14 zum Werkzeugaustausch zu erleichtem, ist der Auflagetisch 12 über nicht gezeigte Scharniere an dem Gestell 10 nach oben verschwenkbar gelagert.

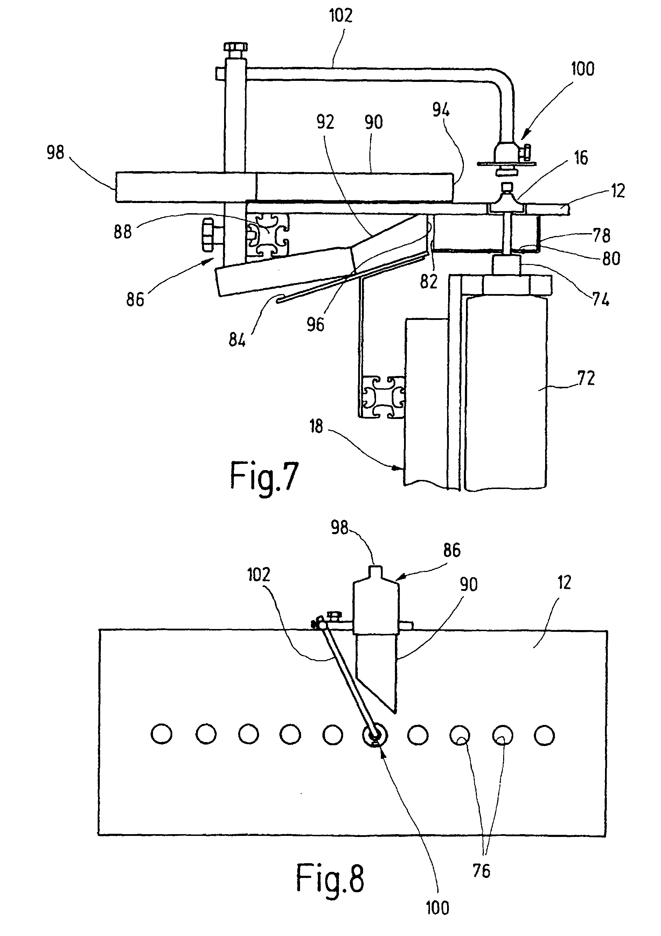

Zur Begrenzung des Spanungsraums ist an der Unterseite des Auflagetisches 12 ein Spanauffangschacht 78 angeordnet, welcher mit den Durchtrittsöffnungen 76 fluchtende Querdurchbrüche 80 für den Durchgriff der Werkzeuge 16 und eine horizontale Längsöffnung 82 zum Auswurf von Spänen auf eine Auffangplatte 84 aufweist. Wie in Fig. 7 und 8 gezeigt, lassen sich die bei der Holzbearbeitung anfallenden Späne und Stäube über eine Absaugvorrichtung 86 absaugen, die an einer kantenseitig längs des Auflagetisches 12 verlaufenden Profilschiene 88 verschiebbar geführt ist. Die Absaugvorrichtung 86 weist zwei ober- und unterhalb des Auflagetisches angeordnete Saugstutzen 90, 92 auf, die mit ihren Saugöffnungen 94, 96 auf ein in der Arbeitsstellung befindliches Bearbeitungsaggregat 14 ausrichtbar und über einen gemeinsamen Auslaß 98 an eine Saugquelle anschließbar sind. Die Saugstutzen 90, 92 besitzen ein U-förmiges Querschnittsprofil, wobei die freien Längskanten des oberen Saugstutzens 90 auf dem Auflagetisch 12 und diejenigen des unteren Saugstutzens 92 auf der Auffangplatte 84 aufliegen. Um die Verletzungsgefahr zu verringern, ist eine das Werkzeug 16 nach oben überdeckende Schutzvorrichtung 100 vorgesehen, die über einen horizontal verschwenkbaren Ausleger 102 mit der Absaugvorrichtung 86 verbunden und gemeinsam mit dieser verschiebbar ist.

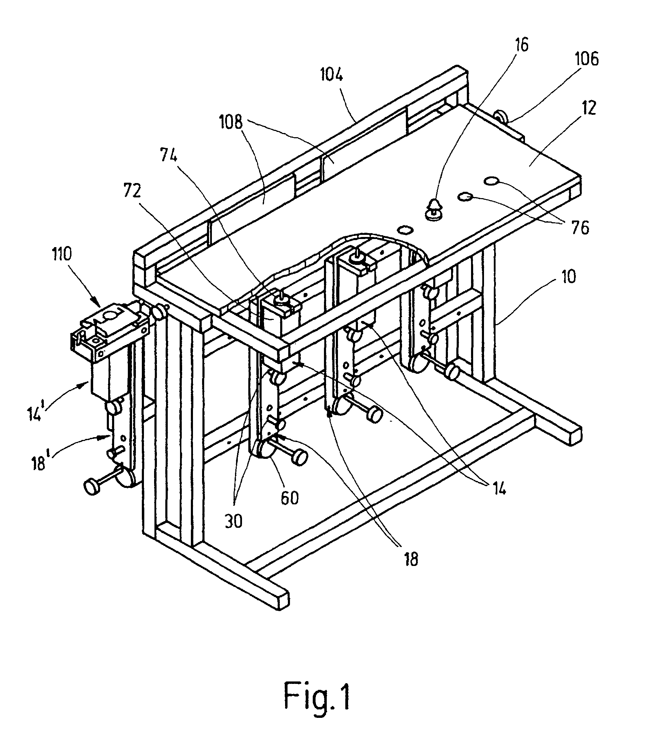

Zur Werkstückführung gegenüber dem jeweiligen in der Arbeitsstellung festgelegten Werkzeug 16 ist das in Fig. 1 gezeigte Anschlaglineal 104 vorgesehen, das an dem Auflagetisch 12 mittels Seitenführungen 106 tiefenverstellbar und gegebenenfalls abnehmbar angeordnet ist. Das Anschlaglineal 104 weist zwei mittels nicht gezeigter Schraubverbindungen längs- und höhenverstellbare Anschlagplatten 108 zur beidseitigen Begrenzung des in der Arbeitsstellung befindlichen Werkzeugs 16 auf.

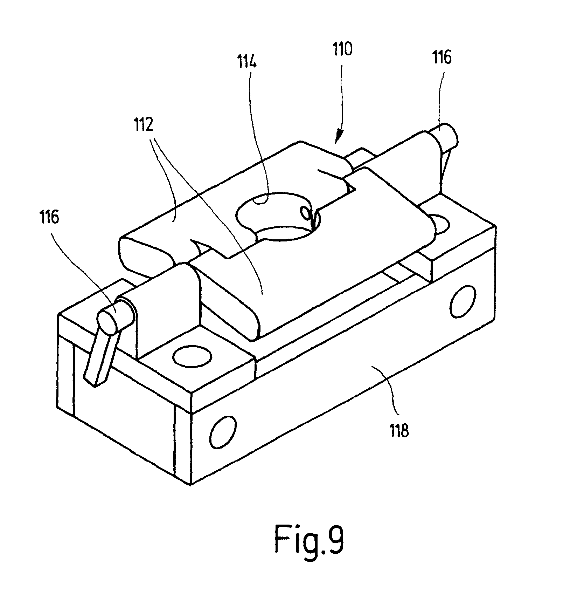

Eine seitlich an dem Auflagetisch 12 angeordnete zusätzliche Verstelleinheit 18' mit zugehörigem Bearbeitungsaggregat 14' ermöglicht eine frei zugängliche Bearbeitung gekrümmter bzw. bogenförmiger Werkstücke. Anstelle des Auflagetisches ist dort die in Fig. 9 gezeigte zweiflügelige Werkstückauflage 110 vorgesehen, die eine exakte Anpassung an die Krümmungskontur eines Werkstücks ermöglicht. Zu diesem Zweck weist die Werkstückauflage 110 zwei schamierartig miteinander verbundene, an einem Tragrahmen 118 gelagerte Auflageflügel 112 auf, die unter Freihaltung einer zentralen Durchtrittsöffnung 114 für ein Fräswerkzeug in veränderlichen Winkelstellungen mittels Schnellspannhebeln 116 gegeneinander feststellbar sind.

## Patentansprüche

1. Vorrichtung zur spanenden Bearbeitung eines Werkstücks in verschiedenen Arbeitsgängen, mit einem Auflagetisch (12) zur Werkstückauflage, mehreren Bearbeitungsaggregaten (14) zum rotierenden Antrieb jeweils eines Werkzeugs (16), insbesondere Fräs-, Bohr-, Säge- oder Schleifwerkzeugs und einer Mehrzahl von unterhalb des Auflagetisches (12) angeordneten Verstelleinheiten (18) zur Höhenverstellung jeweils eines Bearbeitungsaggregats (14) zwischen einer unteren Bereitschaftsstellung und einer oberen Arbeitsstellung, wobei ein in der Arbeitsstellung befindliches Bearbeitungsaggregat (14) mit seinem nach oben abstehenden Werkzeug (16) eine zugehörige Durchtrittsöffnung (76) des Auflagetisches (12) durchgreift, **dadurch gekennzeichnet, dass** die Verstelleinheiten (18) jeweils eine vertikal ausgerichtete Führungsschiene (20) und einen daran geführten Aufnahmeschlitten (22) zur Aufnahme eines Bearbeitungsaggregats (14) aufweisen.

2. Vorrichtung nach Anspruch 1, **dadurch gekennzeichnet, dass** die Verstelleinheiten durch jeweils eine vorzugsweise handbetätigte Schiebevorrichtung (18) gebildet sind.

3. Vorrichtung nach Anspruch 1 oder 2, **dadurch gekennzeichnet, dass** die Verstelleinheiten (18) eine Feststellvorrichtung (30) zur freien Positionierung des Bearbeitungsaggregats (14) in einer vorgesehenen Arbeitsstellung aufweisen.

4. Vorrichtung nach einem der Ansprüche 1 bis 3, **gekennzeichnet durch** einen längs der Führungsschienen (20) geführten und daran in einer frei wählbaren Position fixierbaren Gleitstein (32,40) und ein an dem Aufnahmeschlitten (22) gelagertes, mit dem Gleitstein (32,40) in Eingriff bringbares Feststellorgan (36,50).

5. Vorrichtung nach Anspruch 4, **dadurch gekennzeichnet, dass** das Feststellorgan durch eine in den Gleitstein (32) einschraubbare und dabei eine Klemmverbindung mit der Führungsschiene (20) herstellende, vorzugsweise werkzeuglos betätigbare Feststellschraube (36) gebildet ist.

6. Vorrichtung nach Anspruch 4, **dadurch gekennzeichnet, dass** das Feststellorgan durch einen über eine vorgespannte Feder (54) an dem Aufnahmeschlitten (22) abgestützten, in eine Rastöffnung (48) des Gleitsteins (40) einrastbaren Rastbolzen (50) gebildet ist.

7. Vorrichtung nach Anspruch 6, **dadurch gekennzeichnet, dass** der Gleitstein (40) mittels einer Klemmschraube (44) unabhängig von dem Aufnahmeschlitten (22) an der Führungsschiene (20) vorpositionierbar ist.

8. Vorrichtung nach einem der Ansprüche 4 bis 7, **dadurch gekennzeichnet, dass** der Aufnahmeschlitten (22) und der Gleitstein (32,40) in einer Führungsnut der Führungsschiene (20) vertikal verschiebbar sind.

9. Vorrichtung nach einem der Ansprüche 1 bis 8, **dadurch gekennzeichnet, dass** die Verstelleinheiten (18) einen vorzugsweise handbetätigbaren Vertikaltrieb (60) zum Verschieben des Bearbeitungsaggregats (14) zwischen der Bereitschaftsstellung und der Arbeitsstellung aufweisen.

10. Vorrichtung nach einem der Ansprüche 1 bis 9, dadurch gekennzelchnet, dass an der Führungsschiene (20) eine Exzenterscheibe (62) vorzugsweise mittels Sterngriff (64) exzentrisch drehbar gelagert ist, und dass der Aufnahmeschlitten (22) an seiner nach unten weisenden Stimseite radial auf der Exzenterscheibe (62) abgestützt ist.

11. Vorrichtung nach einem der Ansprüche 1 bis 10, **dadurch gekennzeichnet, dass** die vorzugsweise als Handgerät, insbesondere als Unterflurfräse ausgebildeten Bearbeitungsaggregate (14) einen in seiner Drehzahl einstellbaren Elektromotor (72) und eine damit angetriebene Spindel (74) zur Aufnahme des Werkzeugs (16) aufweisen.

12. Vorrichtung nach einem der Ansprüche 1 bis 11, **dadurch gekennzeichnet, dass** der Auflagetisch (12) über Schamiere an einem Tischgestell (10) nach oben verschwenkbar gelagert ist.

13. Vorrichtung nach einem der Ansprüche 1 bis 12, **dadurch gekennzeichnet, dass** die vertikal ausgerichteten Verstelleinheiten (18) im seitlichen Abstand voneinander angeordnet sind, und dass der Auflagetisch (12) im entsprechenden Abstand voneinander angeordnete, gegenüber den hindurchgreifenden Werkzeugen ein Übermaß aufweisende kreisförmige Durchtrittsöffnungen (76) aufweist.

14. Vorrichtung nach einem der Ansprüche 1 bis 13, **dadurch gekennzeichnet, dass** die Bearbeitungsaggregate (14) über eine Schutzschaltung nur einzeln einschaltbar sind.

## Claims

1. Apparatus for machining a workpiece in various operations, having a support table (12) for supporting the workpiece, a plurality of machining units (14) for rotationally driving in each case one tool (16), in particular a milling, drilling, sawing or grinding tool, and a plurality of adjusting units (18) arranged beneath the support table (12) and intended for adjusting the height of in each case one machining unit (14) between a lower stand-by position and an upper working position, a machining unit (14) situated in the working position having its upwardly protruding tool (16) passing through an associated through-opening (76) of the support table (12), **characterised in that** the adjusting units (18) in each case have a vertically oriented guide rail (20) and a holding slide (22) guided thereon and intended for holding a machining unit (14).

2. Apparatus according to Claim 1, **characterised in that** the adjusting units are formed by in each case one preferably manually actuated sliding device (18).

3. Apparatus according to Claim 1 or 2, **characterised in that** the adjusting units (18) have a locking device (30) for freely positioning the machining unit (14) in an intended working position.

4. Apparatus according to one of Claims 1 to 3, **characterised by** a sliding block (32,40) guided along the guide rails (20) and fixable thereto in a freely selectable position, and a locking member (36,50) mounted on the holding slide (22) and engageable with the sliding block (32,40).

5. Apparatus according to Claim 4, **characterised in that** the locking member is formed by a locking screw (36) which is actuable preferably without a tool and can be screwed into the sliding block (32) and in the process produces a clamping connection with the guide rail (20).

6. Apparatus according to Claim 4, **characterised in that** the locking member is formed by a latching bolt (50) which is supported on the holding slide (22) via a prestressed spring (54) and can latch into a latching opening (48) of the sliding block (40).

7. Apparatus according to Claim 6, **characterised in that** the sliding block (40) can be prepositioned on the guide rail (20) independently of the holding slide (22) by means of a clamping screw (44).

8. Apparatus according to one of Claims 4 to 7, **characterised in that** the holding slide (22) and the sliding block (32,40) are vertically displaceable in a guiding groove of the guide rail (20).

9. Apparatus according to one of Claims 1 to 8, **characterised in that** the adjusting units (18) have a preferably manually actuable vertical drive (60) for displacing the machining unit (14) between the stand-by position and the working position.

10. Apparatus according to one of Claims 1 to 9, **characterised in that** an eccentric disc (62) is eccentrically rotatably mounted on the guide rail (20), preferably by means of star grip (64), and **in that** the holding slide (22) is radially supported, at its downward-facing end face, on the eccentric disc (62).

11. Apparatus according to one of Claims 1 to 10, **characterised in that** the machining units (14), preferably designed as a manual device, in particular as an underfloor milling cutter, have a variable-speed electric motor (72) and a spindle (74) driven thereby for holding the tool (16).

12. Apparatus according to one of Claims 1 to 11, **characterised in that** the support table (12) is mounted such that it can pivot upwards on a table frame (10) via hinges.

13. Apparatus according to one of Claims 1 to 12, **characterised in that** the vertically oriented adjusting units (18) are arranged at a lateral spacing from one another, and **in that** the support table (12) has circular through-openings (76) arranged at a corresponding spacing from one another and having an overdimension with respect to the tools passing through.

14. Apparatus according to one of Claims 1 to 13, **characterised in that** the machining units (14) can only be switched on individually via a protective circuit.

## Revendications

1. Dispositif pour usiner une pièce par enlèvement de copeaux en différentes étapes, comprenant un plateau (12) sur lequel repose la pièce à usiner, plusieurs groupes d'usinage (14) pour entraîner en rotation chacun un outil (16), notamment un outil de fraisage, de perçage, de sciage, de rectification ou d'abrasion et plusieurs unités de déplacement (18) placées sous le plateau (12) pour déplacer en hauteur chacun un groupe d'usinage (14) entre une position d'attente basse et une position de travail haute, un groupe d'usinage (14) se trouvant en position de travail traversant avec son outil (16) pointant vers le haut une ouverture de passage associée (76) du plateau (12), **caractérisé en ce que** les unités de déplacement (18) présentent chacun un rail de guidage (20) orienté verticalement et un chariot (22) de réception guidé sur ce dernier et destiné à recevoir un groupe d'usinage (14).

2. Dispositif selon la revendication 1, **caractérisé en ce que** les unités de déplacement sont chacune constituées par un dispositif de poussée (18) de préférence actionné à la main.

3. Dispositif selon la revendication 1 ou 2, **caractérisé en ce que** les unités de déplacement (18) présentent un dispositif de fixation (30) destiné à positionner librement le groupe d'usinage (14) dans une position de travail prévue.

4. Dispositif selon l'une des revendications 1 à 3, **caractérisé par** un coulisseau (32, 40) guidé le long des rails de guidage (20) et pouvant y être immobilisé dans une position pouvant être choisie librement, et par un organe de fixation (36, 50) monté sur le chariot (22) et pouvant être mis en prise avec le coulisseau (32, 40).

5. Dispositif selon la revendication 4, **caractérisé en ce que** l'organe de fixation est formé par une vis de fixation (36) pouvant être actionnée de préférence sans outil, qui peut être vissée dans le coulisseau (32) et qui crée à cette occasion une liaison par serrage avec le rail de guidage (20).

6. Dispositif selon la revendication 4, **caractérisé en ce que** l'organe de fixation est formé par un boulon d'arrêt (50) prenant appui sur le chariot (22) par le biais d'un ressort précontraint (54) et pouvant s'enclencher dans une ouverture d'enclenchement (48) du coulisseau (40).

7. Dispositif selon la revendication 6, **caractérisé en ce que** le coulisseau (40) peut être prépositionné sur le rail de guidage (20) indépendamment du chariot (22) au moyen d'une vis de serrage (44).

8. Dispositif selon l'une des revendications 4 à 7, **caractérisé en ce que** le chariot (22) et le coulisseau (32, 40) peuvent coulisser verticalement dans une rainure de guidage du rail de guidage (20).

9. Dispositif selon l'une des revendications 1 à 8, **caractérisé en ce que** les unités de déplacement (18) présentent une commande verticale (60) pouvant être actionnée de préférence manuellement pour déplacer le groupe d'usinage (14) entre la position d'attente et la position de travail.

10. Dispositif selon l'une des revendications 1 à 9, **caractérisé en ce qu'**un disque d'excentrique (62) est monté sur le rail de guidage (20) de préférence de façon à pouvoir tourner de façon excentrique au moyen d'une poignée-étoile (64), et **en ce que** le chariot (22) prend appui radialement sur le disque d'excentrique (62) avec sa face frontale pointant vers le bas.

11. Dispositif selon l'une des revendications 1 à 10, **caractérisé en ce que** les groupes d'usinage (14) réalisés de préférence en tant qu'appareil à utilisation manuelle, notamment en tant que fraiseuse à action par le dessous, présentent un moteur électrique (72) dont la vitesse est réglable et une broche (74) entraînée par ce dernier, qui est destinée à porter l'outil (16).

12. Dispositif selon l'une des revendications 1 à 11, **caractérisé en ce que** le plateau (12) est monté sur un bâti (10) par le biais de charnières de façon à pouvoir être rabattu vers le haut.

13. Dispositif selon l'une des revendications 1 à 12, **caractérisé en ce que** les unités de déplacement (18) orientées verticalement sont disposées côte à côte en étant espacées les unes des autres, et **en ce que** le plateau (12) comporte des ouvertures de passage (76) circulaires présentant le même espacement, dont les dimensions sont légèrement supérieures à celles des outils qui passent à travers elles.

14. Dispositif selon l'une des revendications 1 à 13, **caractérisé en ce qu'**un circuit protecteur ne permet de mettre en marche qu'un groupe d'usinage (14) à la fois.
